# DEMANDE DE BREVET EUROPEEN

(11) **EP 1 149 659 A1**
(43) Date de publication de la demande: **31.10.2001**
(21) Numéro de dépôt: 01400811.4
(22) Date de dépôt: 29.03.2001
(51) Int. Cl.: B23K 26/12

(54) **Coupage laser de tôle galvanisée avec un mélange azote/oxygène en tant que gaz d'assistance**

(30) Priorité: 26.04.2000 FR 0005300
(71) Demandeur: L'AIR LIQUIDE, SOCIETE ANONYME POUR L'ETUDE ET L'EXPLOITATION DES PROCEDES GEORGES CLAUDE, 75007 Paris (FR)
(72) Inventeur: Matile, Olivier, 75018 Paris (FR); Bertez, Christophe, 95450 Vaureal (FR)
(74) Mandataire: Pittis, Olivier

(57) **Abrégé**

Procédé de coupage d'une pièce en acier revêtu, tels les aciers galvanisés, par mise en oeuvre d'au moins un faisceau laser et d'au moins un gaz d'assistance dudit faisceau laser, dans lequel le gaz d'assistance est constitué d'un mélange d'azote et d'oxygène contenant de 2 à 20 % en volume d'oxygène, le reste étant de l'azote. Ce procédé permettant d'améliorer la vitesse de coupe, la rugosité des faces de coupe et diminuer la pression du gaz d'assistance à mettre en oeuvre.

## Description

La présente invention concerne un procédé et une installation de coupage par faisceau laser des tôles galvanisées utilisant un mélange azote/oxygène en tant que gaz d'assistance du faisceau laser.

La technologie du laser est largement connue et utilisée pour découper des matériaux métalliques divers, telles des pièces en aciers alliés ou non, en aciers revêtus, en aciers inoxydables, en aluminium et alliages d'aluminium .

D'une façon générale, une installation de coupage laser comprend un oscillateur laser solide ou à gaz produisant un faisceau monochromatique cohérent de haute énergie, un chemin optique équipé de miroirs de renvois ou bien une fibre optique permettant d'amener le faisceau laser vers une tête de découpe située en regard de la tôle à découper.

La tête de découpe comprend classiquement une lentille ou un miroir de focalisation de façon à focaliser le faisceau laser en un ou plusieurs points de focalisation dans l'épaisseur du matériau à couper de façon à concentrer localement suffisamment de densité de puissance pour fondre le matériau à découper.

De plus, la tête de découpe comprend généralement un dispositif d'amené de gaz permettant l'alimentation en gaz de découpe, encore appelé gaz d'assistance, par l'intermédiaire d'une buse de distribution de gaz placée coaxialement au faisceau laser.

L'importance du gaz d'assistance est bien connue et son action intervient à plusieurs titres complémentairement à l'effet thermique du faisceau laser focalisé.

En effet, le gaz d'assistance permet, de par son action cinétique, de chasser le métal fondu hors de la saignée de coupe pendant la découpe proprement dite.

Certains gaz ou mélanges gazeux sont plus utilisés que d'autres à l'échelle industrielle, notamment du fait de considérations techniques et/ou financières.

Ainsi, il est connu que l'oxygène présente des caractéristiques de découpe intéressantes pour découper le fer ou les métaux à base de fer. En effet, étant donné la réaction exothermique bien connue de l'oxygène avec le fer, par exemple dans le cas des aciers doux, il se produit un fort dégagement de chaleur permettant d'accroître les performances de découpe.

Bien que l'oxygène soit ainsi souvent préconisé pour optimiser les performances de découpe, il apparaît toutefois que l'utilisation d'oxygène en tant que gaz d'assistance du faisceau laser engendre la plupart du temps une oxydation intempestive des faces de la saignée de coupe.

Dans le but de limiter cette oxydation superficielle des bords de coupe, il est possible d'utiliser de l'hélium ou de l'argon. Cependant, ces gaz sont très peu utilisés au plan industriel dans ce genre d'applications, du fait de leur coût élevé.

Il est également possible d'utiliser un gaz inerte, tel que l'azote, moins cher que l'hélium ou l'argon.

Toutefois, étant donné que l'azote n'engendre pas de réaction exothermique avec le matériau (gaz non-oxydant), les performances opératoires sont nettement limitées par rapport à l'oxygène mais, par contre, les faces de coupes sont exemptes d'oxyde.

Actuellement, il existe un problème au plan industriel lorsque le matériau à découper est en acier revêtu, telle une tôle galvanisée, c'est-à-dire d'un matériau en acier portant un revêtement de nature différente, tel du zinc, présentant des caractéristiques physico-chimiques différentes de celles de l'acier, en particulier une température de fusion différente.

Les aciers revêtus, comme par exemple les tôles galvanisées, se découpent principalement sous azote haute pression d'une façon similaire aux aciers inoxydables. Les tôles galvanisées peuvent être obtenues par galvanisation à chaud, dépôt d'un revêtement de zinc par immersion dans un bain de zinc fondu, ou bien par voie électrolytique, c'est-à-dire dépôt d'un revêtement de zinc provenant d'une solution aqueuse de sels de zinc sous l'influence d'un champs électrique. Dans un soucis d'amélioration des performances opératoires, en coupage laser, on recherche continuellement à encore améliorer les paramètres du procédé de coupage, c'est-à-dire à gagner en vitesse de coupage mais en réduisant les pressions d'alimentation en gaz de découpe.

La découpe des aciers revêtus, c'est-à-dire galvanisés, dans le cas de l'utilisation d'oxygène comme gaz d'assistance engendre la formation d'une face de coupe rugueuse résultant d'une forte instabilité, lors de la découpe, provenant de réactions chimiques entre le zinc et l'oxygène.

Dans le cas de l'utilisation d'azote en tant que gaz d'assistance du laser, la contribution du gaz de découpe n'intervient que pour expulser le métal fondu, ce qui implique la mise en oeuvre de fortes pressions de gaz, c'est-à-dire de l'ordre de 10 à 30 bars. L'utilisation de telles pressions nécessite de choisir un moyen d'alimentation en gaz spécifique, par exemple d'un surpresseur permettant d'augmenter la pression du gaz de coupage à la valeur voulue. Plus l'épaisseur à couper est importante, plus la pression du gaz de coupe doit donc être élevée, ce qui pose des problèmes de mise en oeuvre car travailler à des pressions élevées n'est pas toujours aisé au plan industriel.

De plus, étant donné que l'azote ne réagit pas avec les aciers revêtus, c'est-à-dire galvanisés, l'absence de réaction exothermique entre l'azote et le matériau à couper qui en découle limite considérablement les vitesses de coupe, ce qui n'est pas acceptable au plan industriel.

Tout ceci conduit à limiter considérablement les performances du procédé de coupage.

Le but de la présente invention est alors de résoudre ce problème, c'est-à-dire de proposer une méthode permettant d'améliorer notablement les performances du procédé lors de la découpe par laser des aciers revêtus, en particulier les tôles zinguées.

De là, la solution apportée par l'invention est alors un procédé de coupage d'une pièce en acier revêtu, en particulier galvanisé, par mise en oeuvre d'au moins un faisceau laser et d'au moins un gaz d'assistance dudit faisceau laser, dans lequel le gaz d'assistance est constitué d'un mélange d'azote et d'oxygène contenant de 2 à 20 % en volume d'oxygène, le reste étant de l'azote.

Selon le cas, le procédé de l'invention peut comprendre l'une ou plusieurs des caractéristiques suivantes :
- le gaz d'assistance est constitué d'un mélange d'azote et d'oxygène contenant de 2 à 10 % en volume d'oxygène, le reste étant de l'azote, de préférence de 3 à 10 % en volume d'oxygène, le reste étant de l'azote.
- le faisceau laser est émis par un laser de type YAG ou CO₂.
- on utilise un moyen optique pour focaliser le faisceau laser, ledit moyen optique étant agencé de manière à obtenir au moins un point de focalisation se positionnant à proximité de la surface inférieure de la pièce à découper.
- pendant le coupage, on déplace le faisceau laser et la pièce à découper, relativement l'un par rapport à l'autre, à une vitesse de 0,3 m/min. à 100 m/min, de préférence de 0,5 à 50 m/min.
- la pression du gaz d'assistance est comprise entre 0,5 bar et 35 bars, de préférence de 1 bar à 30 bars.
- l'épaisseur de la pièce à couper est comprise entre 0,01 mm et 20 mm.
- la pièce à couper est choisie parmi les plaques, les tôles et les tubes.
- le mélange azote/oxygène est obtenu directement sur site d'utilisation à partir d'air atmosphérique traité par un système à membrane.
- la pièce à couper est en acier revêtu choisi parmi les aciers revêtus par du zinc, les aciers revêtus par de l'oxyde de zinc et les aciers revêtus par tout autre composé intermédiaire à base de zinc.

En d'autres termes, les inventeurs de la présente invention ont mis en évidence qu'il est possible d'améliorer notablement les performances d'un procédé de coupage laser avec gaz d'assistance des aciers revêtus ou galvanisés, lorsqu'on utilise un mélange d'azote et d'oxygène en tant que gaz d'assistance.

### Exemples

Les essais ont été réalisés pour démontrer que l'utilisation de mélanges binaires azote/oxygène permettent d'optimiser les performances du procédé de découpe des aciers galvanisés par rapport à un procédé classique utilisant de l'azote.

Les essais ont consisté à opérer une découpe d'un acier galvanisé d'épaisseur 3 mm à une puissance laser de 1500 W, le point de focalisation du faisceau étant localisé à 3 mm en dessous de la tôle à couper, en utilisant selon le cas de l'azote pur ou des mélanges d'azote et d'oxygène selon l'invention en tant que gaz d'assistance du faisceau laser.

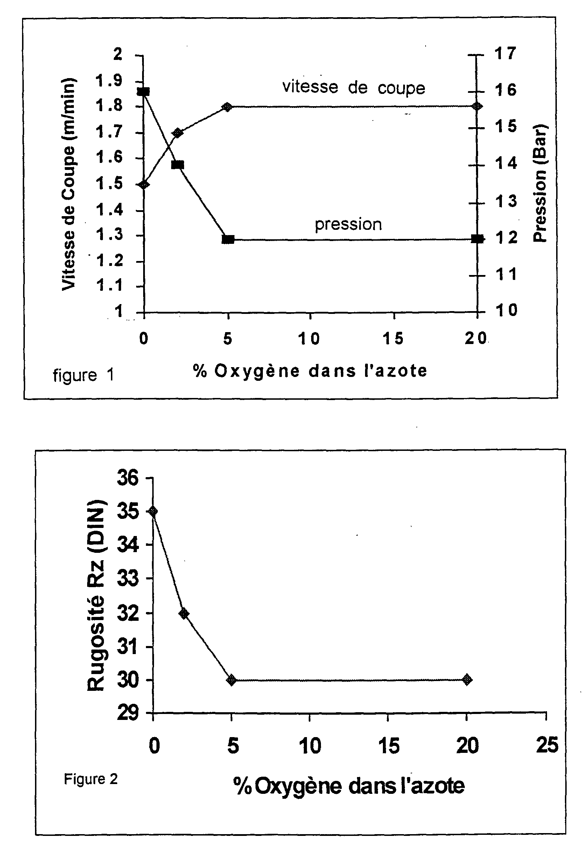

Les résultats obtenus sont schématisés sur les figures 1 et 2 annexées.

Comme le montre la figure 1, des mélanges O₂/N₂ contenant de 2 à 20 % en volume d'oxygène, le reste étant de l'azote, de préférence 3 à 10 % vol. d'oxygène, conduisent à une augmentation de la vitesse de coupage de 20 % pour un acier galvanisé d'épaisseur 3 mm par comparaison avec un procédé classique utilisant uniquement de l'azote, les autres conditions opératoires étant égales par ailleurs.

Ainsi, avec un mélange azote + 5 % oxygène, on a atteint des vitesses de coupe allant jusqu'à 1,8 m/min pour une pression de gaz de 12 bars.

De plus, la Figure 1 montre clairement que des mélanges binaires O₂/N₂ avec entre 2 et 20 % vol. d'oxygène, de préférence 3 à 10 % vol. d'oxygène, conduisent à une réduction de la pression de mise en oeuvre du gaz de 25 % par comparaison avec un procédé classique utilisant uniquement de l'azote. Ceci est particulièrement avantageux car les valeurs de pression sont alors telles qu'il n'est plus nécessaire d'utiliser des systèmes spécifiques de mise en oeuvre du gaz, ce qui simplifie alors l'installation et permet donc de réaliser une économie en matériel.

Par ailleurs, la figure 2 met, quant à elle, en évidence que l'utilisation de mélanges gazeux binaires O₂/N₂ constitués de 2 à 20 % vol. d'oxygène, le reste étant de l'azote et des impuretés éventuelles inévitables, de préférence 2 à 5 % vol. d'oxygène, permettent de diminuer la rugosité (Rz) des faces coupées par rapport à de l'azote, du fait de l'accroissement de la vitesse de coupe (1.3 m/min ici), ce qui est aussi particulièrement avantageux au plan industriel.

De façon générale, le procédé de coupage laser de l'invention est applicable à la découpe par laser CO₂ et YAG de toutes les tôles revêtues et notamment des tôles galvanisées.

Un mélange azote/oxygène utilisable dans le cadre de l'invention peut être obtenu, par exemple, directement sur site d'utilisation à partir d'air atmosphérique traité par un système à membrane de manière à diminuer sa teneur en oxygène jusqu'à une valeur souhaitée. Un système à membrane de ce type est commercialisé par la Société L'AIR LIQUIDE sous la dénomination FLOXAL™.

Toutefois, le mélange azote/oxygène peut également être réalisé plus classiquement par mélange d'azote et d'oxygène en proportions souhaitées.

## Revendications

1. Procédé de coupage d'une pièce en acier revêtu, en particulier galvanisé, par mise en oeuvre d'au moins un faisceau laser et d'au moins un gaz d'assistance dudit faisceau laser, dans lequel le gaz d'assistance est constitué d'un mélange d'azote et d'oxygène contenant de 2 à 20 % en volume d'oxygène, le reste étant de l'azote.

2. Procédé selon la revendication 1, **caractérisé en ce que** le gaz d'assistance est constitué d'un mélange d'azote et d'oxygène contenant de 2 à 10 % en volume d'oxygène, le reste étant de l'azote, de préférence de 3 à 10 % en volume d'oxygène, le reste étant de l'azote.

3. Procédé selon l'une des revendications 1 ou 2, **caractérisé en ce que** le faisceau laser est émis par un laser de type YAG ou CO₂.

4. Procédé selon l'une des revendications 1 à 3, **caractérisé en ce qu'**on utilise un moyen optique pour focaliser le faisceau laser, ledit moyen optique étant agencé de manière à obtenir au moins un point de focalisation se positionnant à proximité de la surface inférieure de la pièce à découper.

5. Procédé selon l'une des revendications 1 à 4, **caractérisé en ce que**, pendant le coupage, on déplace le faisceau laser et la pièce à découper, relativement l'un par rapport à l'autre, à une vitesse de 0,3 m/min. à 100 m/min , de préférence de 0,5 à 50 m/min.

6. Procédé selon l'une des revendications 1 à 5, **caractérisé en ce que** la pression du gaz d'assistance est comprise entre 0,5 bar et 35 bars, de préférence de 1 bar à 30 bars.

7. Procédé selon l'une des revendications 1 à 6, **caractérisé en ce que** l'épaisseur de la pièce à couper est comprise entre 0,01 mm et 20 mm.

8. Procédé selon l'une des revendications 1 à 7, **caractérisé en ce que** la pièce à couper est choisie parmi les plaques, les tôles et les tubes.

9. Procédé selon l'une des revendications 1 à 8, **caractérisé en ce que** le mélange azote/oxygène est obtenu directement sur site d'utilisation à partir d'air atmosphérique traité par un système à membrane.

10. Procédé selon l'une des revendications 1 à 9, **caractérisé en ce que** la pièce à couper est en acier revêtu choisi parmi les aciers revêtus par du zinc, les aciers revêtus par de l'oxyde de zinc et les aciers revêtus par tout autre composé intermédiaire à base de zinc.
